# FASCICULE DE BREVET EUROPEEN

(11) **EP 1 274 618 B1**
(45) Date de publication et mention de la délivrance du brevet: **23.05.2007**
(21) Numéro de dépôt: 01943363.0
(22) Date de dépôt: 19.04.2001
(51) Int. Cl.: B60T 13/575

(54) **SERVOMOTEUR COMPORTANT UNE DOUILLE DE BLOCAGE FORMANT PALPEUR**
BREMSKRAFTVERSTÄRKER MIT EINER EINEN TASTER BILDENDEN BLOCKIERHÜLSE
SERVOMOTOR COMPRISING A LOCKING BUSHING FORMING A FEELER

(30) Priorité: 21.04.2000 FR 0005668
(43) Date de publication de la demande: 15.01.2003
(73) Titulaire: BOSCH SISTEMAS DE FRENADO, S.L., 08080 Barcelona 6 (ES)
(72) Inventeur: SIMON BACARDIT, Juan, Barcelona (ES)
(74) Mandataire: Hurwic, Aleksander Wiktor
(86) Numéro de dépôt international: PCT/EP2001/005492
(87) Numéro de publication internationale: WO 2001/081143

(56) Documents cités:
- WO-A-01/17831
- DE-A- 19 755 442
- DE-A- 19 831 962
- DE-A- 19 902 710

## Description

L'invention concerne un servomoteur pneumatique d'assistance au freinage pour un véhicule automobile.

L'invention concerne plus particulièrement un servomoteur pneumatique d'assistance au freinage pour un véhicule automobile, du type qui comporte une enveloppe rigide à l'intérieur de laquelle est mobile une cloison transversale délimitant de façon étanche une chambre avant, soumise à une première pression de dépression moteur, et une chambre arrière soumise à une deuxième pression variant entre la dépression moteur et la pression atmosphérique, du type qui comporte un piston mobile solidaire de la cloison mobile et une tige de commande se déplaçant dans le piston sélectivement en fonction d'un effort axial d'entrée exercé vers l'avant à l'encontre d'un effort de rappel exercé sur la tige par un ressort de rappel, du type dans lequel la tige est mobile suivant une position d'actionnement intermédiaire ou une position d'actionnement extrême obtenue lorsque l'effort d'entrée est appliqué à une vitesse élevée déterminée, du type qui comporte un plongeur qui est agencé à l'avant de la tige de commande dans le piston et un clapet à trois voies qui comporte au moins un siège annulaire arrière du plongeur et qui est susceptible de faire varier la deuxième pression régnant dans la chambre arrière, notamment en mettant en communication la chambre avant et la chambre arrière lorsque la tige de commande est en position de repos ou en mettant progressivement la chambre arrière en communication avec la pression atmosphérique lorsque la tige de commande est actionnée, du type dans lequel, dans la position extrême d'actionnement de la tige de commande, un palpeur monté coulissant à l'extrémité avant du plongeur est sollicité par le plongeur au contact d'un disque de réaction solidaire de la face arrière du piston mobile pour transmettre au plongeur et à la tige de commande l'effort de réaction du piston mobile, et du type qui comporte un dispositif d'embrayage unidirectionnel qui comporte une douille coaxiale qui coulisse sur le plongeur, et une clé sensiblement annulaire qui entoure avec jeu la douille et qui est susceptible, lorsque l'effort d'entrée est appliqué à ladite vitesse déterminée, d'être entraînée par le piston de commande pour basculer autour d'un axe globalement transversal pour coopérer avec la périphérie de la douille et pour la bloquer dans une position axiale avant extrême dans laquelle elle bloque le palpeur indépendamment du plongeur et de la tige de commande.

De manière connue, une telle conception présente des avantages considérables en terme de sécurité lors d'une situation de freinage d'urgence.

En effet, un servomoteur conventionnel ne comporte ni palpeur indépendant, ni dispositif d'embrayage unidirectionnel du palpeur. Un tronçon d'extrémité du plongeur, formant palpeur, est susceptible de venir solliciter directement le disque de réaction solidaire de la face arrière du piston mobile.

Dans une situation de freinage extrême pour laquelle un effort de freinage maximal est exercé sur la tige de commande, l'actionnement de la tige du commande provoque l'actionnement du plongeur formant aussi palpeur, ce qui provoque l'ouverture maximale du clapet à trois voies de manière que la chambre arrière soit mise à la pression atmosphérique. Il s'ensuit un déplacement vers l'avant de la cloison mobile et l'extrémité du plongeur vient au contact du disque de réaction solidaire de la face arrière du piston mobile.

Ainsi, l'effort exercé sur le piston mobile lorsque la tige de commande est en fin de course résulte de l'effort d'assistance qui est provoqué par la différence de pression de chaque côté de la paroi mobile et de l'effort exercé par le plongeur formant palpeur sur ledit piston mobile. Le conducteur du véhicule ressent par ailleurs l'effort de réaction du freinage, qui est transmis du piston mobile au plongeur par l'intermédiaire du disque de réaction.

Or, on a constaté que bon nombre de conducteurs, confrontés à une situation de freinage d'urgence, sous-estimaient les risques encourus, et que, après avoir freiné brutalement, ils relâchaient leur effort de freinage alors que le maintien d'un effort de freinage était indispensable pour éviter un accident.

En effet, dans le cas d'une situation de freinage extrême accompagnée d'un déplacement rapide de la tige de commande, le plongeur peut venir au contact du disque de réaction et transmettre au conducteur une sensation de freinage maximal avant même que la différence de pression ne soit maximale entre les chambres de pression avant et arrière, ce qui peut conduire le conducteur à relâcher son effort, quand bien même il devrait être maintenu pour bénéficier de l'effort de freinage maximal.

Un servomoteur du type de celui décrit précédemment permet de remédier à cet inconvénient en bloquant le plongeur au contact du disque de réaction à l'aide la douille et donc de maintenir un effort maximal sur la face arrière du piston mobile quand bien même le conducteur aurait partiellement relâché son effort.

Toutefois, le servomoteur du type décrit précédemment présente l'inconvénient, à la différence d'un servomoteur dépourvu d'embrayage unidirectionnel, de nécessiter lors de sa fabrication, la réalisation d'une douille et d'un palpeur usinés indépendamment, car l'immobilisation axiale de la douille n'est assurée que de façon relativement imprécise.

En effet, la clé bloquant la douille par simple coincement, c'est à dire par l'intermédiaire d'un contact linéique, voire quasi-ponctuel, entre un bord d'une lumière circulaire de la clé et la périphérie de la douille, la douille est susceptible de glisser au contact de la clé.

Dans le cas d'un mauvais positionnement de la clé sur la douille en situation extrême de freinage, on court le risque, si la palpeur est réalisé d'un seul tenant avec la douille, de voir la douille bloquée dans une position dans laquelle son palpeur ne solliciterait pas le disque de réaction solidaire du piston mobile.

Pour remédier à cet inconvénient, l'invention propose une conception monobloc de la douille et du palpeur associée à des moyens fiables d'immobilisation précise de la douille.

Dans ce but, l'invention propose un servomoteur du type décrit précédemment, caractérisé en ce que le palpeur est solidaire axialement de la douille et en ce qu'il est prévu des moyens pour indexer axialement la position de blocage de la douille.

Selon d'autres caractéristiques de l'invention :
- le palpeur est réalisé en une seule pièce venue de matière avec la douille,
- la douille comporte un tronçon d'extrémité libre avant formant palpeur qui est monté coulissant dans un alésage avant complémentaire du piston,
- la douille comporte un tronçon cylindrique intermédiaire qui est d'un diamètre supérieur au tronçon d'extrémité libre avant de la douille et qui est monté coulissant dans un alésage arrière complémentaire du piston,
- des moyens élastiques sont montés entre un épaulement radial du piston, qui délimite les alésages avant et arrière, et un épaulement avant de la douille qui délimite le tronçon d'extrémité avant et le tronçon intermédiaire pour rappeler la douille axialement vers l'arrière en butée contre le plongeur,
- les moyens de rappel élastique comportent un ressort hélicoïdal de compression enfilé sur le tronçon cylindrique d'extrémité avant de la douille,
- le plongeur est monté coulissant dans un perçage de la douille dont une face avant de fond permet l'appui axial du plongeur dans la position extrême d'actionnement de la tige de commande,
- la douille comporte au moins un face transversale de blocage, qui est tournée axialement vers l'arrière pour former une butée pour un ergot de la clé s'étendant radialement vers la douille, de manière à indexer axialement la position de blocage extrême de la douille,
- la douille est cylindrique, d'un diamètre sensiblement constant, et comporte une gorge radiale d'un profil sensiblement tronconique dont une face transversale avant d'épaulement forme la face transversale de blocage,
- la clé présente, en section par un plan axial, la forme d'un "T" dont la branche verticale d'orientation sensiblement radiale est traversée par la douille et dont la branche horizontale comporte en saillie de son extrémité avant l'ergot conformé selon un secteur angulaire tronconique concave complémentaire du profil tronconique de la gorge de la douille, et est conformée à ses deux extrémités en arc de cylindre pour être reçue sans jeu axial entre deux parois d'un évidement qui traverse le piston perpendiculairement par rapport à son axe de façon à ne permettre qu'un basculement de la clé dans l'évidement, la clé étant par ailleurs rappelée élastiquement à l'encontre de la paroi arrière de l'évidement.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'ensemble d'un servomoteur pneumatique d'assistance au freinage réalisé conformément à un état antérieur de la technique,
- la figure 2 est une vue de détail éclatée en perspective du plongeur, de la douille, de la clé et du plongeur du servomoteur de la figure 1,
- la figure 3 est une vue de détail en coupe axiale d'un servomoteur pneumatique d'assistance au freinage réalisé conformément à l'invention et représenté en position de repos,
- la figure 4 est une vue de détail en coupe axiale, au voisinage du plongeur, de la douille, et de la clé, du servomoteur de la figure 3 représenté en position de blocage de la douille,
- la figure 5 est une vue de détail en perspective du plongeur, de la douille, de la clé du servomoteur de la figure 3.

Dans la description qui va suivre, des chiffres de référence identiques désignent des pièces identiques ou ayant des fonctions similaires.

Par convention, les termes "avant", "arrière", supérieur", "inférieur" désignent respectivement des éléments ou des positions orientés respectivement vers la gauche, la droite, le haut, ou le bas des figures.

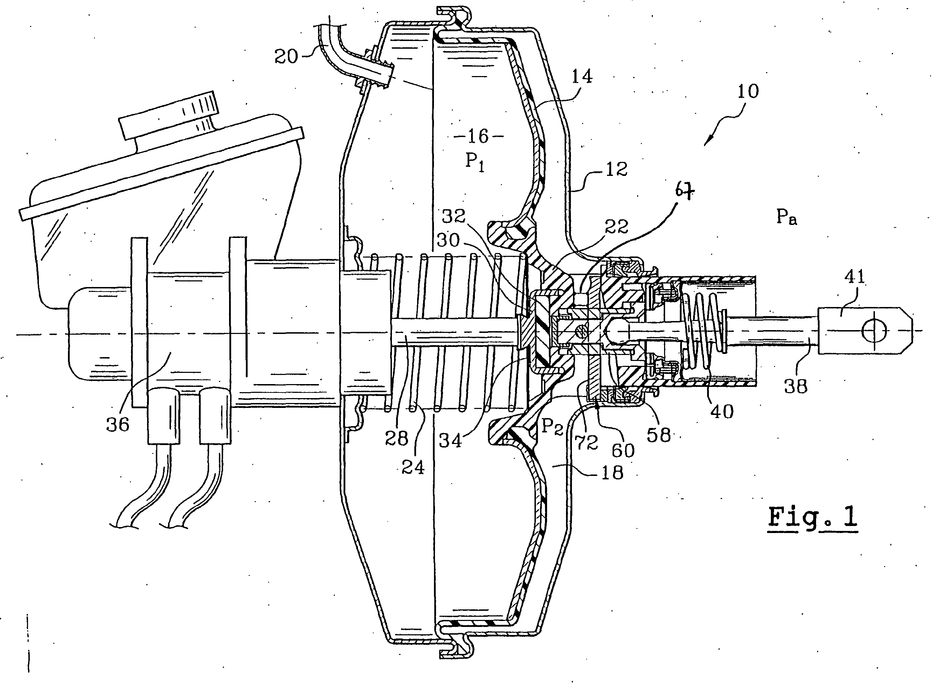

On a représenté à la figure 1 l'ensemble d'un servomoteur 10 pneumatique conventionnel d'assistance au freinage pour un véhicule automobile.

De manière connue, le servomoteur pneumatique 10 comporte une enveloppe rigide 12 à l'intérieur de laquelle est montée mobile une cloison 14 transversale qui délimite de façon étanche une chambre avant 16, soumise à une première pression "P₁" dont la valeur est égale à la valeur de dépression du moteur du véhicule, et une chambre arrière 18 soumise à une deuxième pression "P₂". La deuxième pression "P₂" est susceptible, comme il sera décrit ultérieurement, de varier entre la valeur de dépression moteur "P₁" et la valeur de la pression atmosphérique "Pₐ".

La chambre avant 16 est alimentée en pression "P₁" par l'intermédiaire d'un conduit 20 de dépression qui est relié à une source de dépression du véhicule, par exemple une dépression régnant dans un collecteur d'admission (non représenté) d'un moteur du véhicule.

Le servomoteur pneumatique 10 comporte un piston mobile 22 qui est solidaire de la cloison mobile 14. A l'intérieur de l'enveloppe 12, la cloison mobile 14 est rappelée élastiquement vers l'arrière par un ressort 24 de rappel qui prend appui sur l'enveloppe 12 et sur une face avant 26 du piston mobile 22. La face avant 26 du piston mobile 22 porte une coupelle 30 de réaction à l'intérieur de laquelle est agencé, comme on le verra plus loin, un disque de réaction 32 en matériau élastomère. Une face avant 34 de la coupelle 30 de réaction est solidaire d'une tige d'actionnement 28, qui par conséquent est solidaire des déplacements du piston mobile 22, et qui permet l'actionnement d'un maître-cylindre 36 hydraulique de freinage du véhicule.

Une tige 38 de commande, qui est par exemple reliée à une pédale de frein du véhicule par l'intermédiaire d'un manchon 41 d'accouplement qui est agencé à son extrémité libre arrière, est susceptible de se déplacer dans le piston mobile 22, sélectivement en fonction d'un effort axial d'entrée exercé vers l'avant sur la tige 38 de commande. L'effort d'actionnement est exercé à l'encontre d'un effort de rappel produit sur la tige 38 par un ressort de rappel 40 qui est interposé entre le piston mobile 22 et la tige 38 de commande.

L'extrémité avant de la tige 38 de commande qui est opposée à son extrémité libre est conformée en rotule 42 et est reçue dans un logement 44 complémentaire d'un plongeur 46 sensiblement cylindrique qui est monté coulissant dans le piston mobile 22.

Un siège annulaire arrière 48 du plongeur 46 fait partie d'un clapet 50 à trois voies qui est susceptible de faire varier la deuxième pression "P₂" régnant dans la chambre arrière 18, notamment en mettant en communication la chambre avant 16 et la chambre arrière 18 lorsque la tige 38 de commande est en position de repos, ou en mettant progressivement la chambre arrière 18 en communication avec la pression atmosphérique "Pₐ" lorsque la tige 38 de commande est actionnée.

Le fonctionnement du clapet à trois voies 50 étant connu de l'état de la technique, il ne sera pas décrit plus explicitement dans la présente description.

De manière connue, un palpeur 52 est monté coulissant à la fois sur l'extrémité avant du plongeur 46 qui est opposée au logement 44, et à l'intérieur d'un alésage 54 du piston mobile 22 qui débouche en regard de la coupelle de réaction 30. De la sorte, le palpeur 52 est susceptible d'être sollicité par le plongeur 46 pour solliciter à son tour le disque 32 de réaction et le comprimer, ce qui permet ainsi de transmettre au plongeur 46 et, ce faisant, à la tige de commande 48, l'effort de réaction du piston mobile 26 dans une position d'actionnement extrême de fin de course de la tige de commande 38.

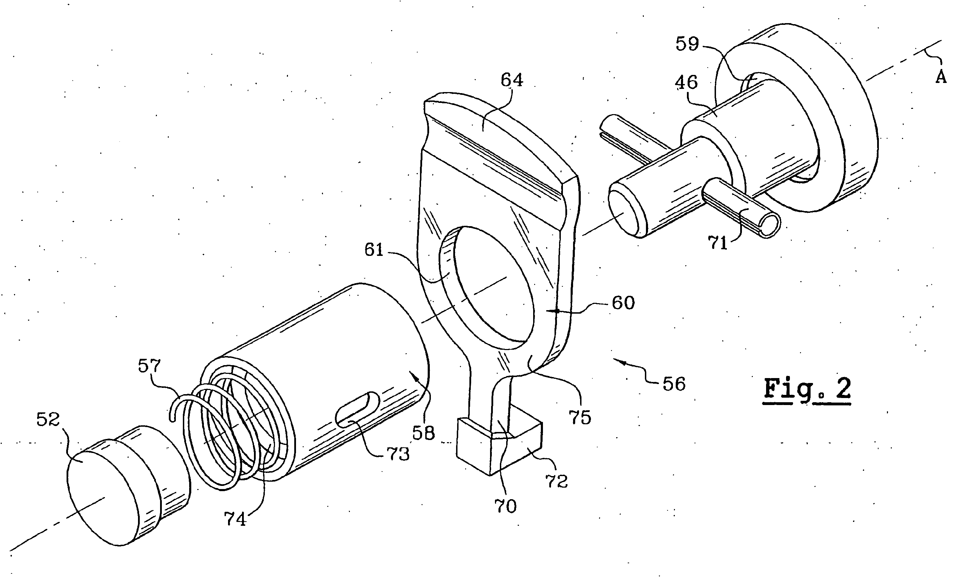

De manière connue, comme l'illustre la figure 1 et plus particulièrement la figure 2, le servomoteur 10 comporte un dispositif 56 d'embrayage unidirectionnel qui comporte d'une part une douille 58 coaxiale qui coulisse sur le plongeur 46 et qui est rappelée élastiquement au contact avec une face d'épaulement 59 du plongeur 46, par l'intermédiaire d'un ressort 57, interposé entre le piston 22 et la douille 58.Le servomoteur 10 comporte d'autre part une clé 60 sensiblement annulaire qui entoure avec jeu radial la douille 58. En particulier, lorsque le servomoteur 10 est assemblé, la douille 58 traverse une lumière circulaire 61 de la clé 60.

Comme l'illustre la figure 1, la clé 60 est disposée dans un évidement 62 qui traverse le piston 22 perpendiculairement à son axe A.

Une partie supérieure 64 de la clé 60 est rappelée élastiquement à l'encontre d'une paroi arrière 66 de l'évidement 62 par l'intermédiaire d'un ressort 67 de rappel qui est interposé entre une paroi avant 68 de l'évidement 62 et la partie supérieure 64 de la clé 60.

Une partie inférieure 70 de la clé 60 est, en position de repos, en appui sur un support 72 qui est lié à l'enveloppe 12 du servomoteur 10. Une goupille transversale 71, qui traverse une lumière 73 de la douille 58 et le plongeur 46, est, en position de repos de la tige 38, en appui sur une face avant 75 de la clé 60 pour définir la position de repos du plongeur 46.

De la sorte, lorsqu'un effort d'entrée est appliqué d'arrière en avant suivant une course extrême de la tige de commande 38, et notamment à une vitesse déterminée de celle-ci, la partie supérieure 64 de la clé 60 est entraînée par le piston 22. de commande tandis que sa partie inférieure 70 quitte son appui sur le support 72. De ce fait, la clé 30 bascule autour d'un axe globalement transversal et dans le sens anti-horaire pour coopérer avec la périphérie de la douille 58.

Tant que le mouvement de la tige de commande 38 se poursuit d'arrière en avant et que celle-ci entraîne avec elle la douille 58 par l'intermédiaire de sa face d'épaulement 59, l'effort appliqué sur la tige de commande 38 suffit à empêcher le blocage total de la douille 58, car il est plus élevé que l'effort exercé par la le ressort 67 sur la clé 60.

En revanche, si le conducteur relâche prématurément son effort sur la tige 38, la douille 58 est bloquée par la clé 60 dans une position axiale avant extrême dans laquelle une portée annulaire 74 d'extrémité avant de la douille bloque le palpeur 52 indépendamment du plongeur et de la tige de commande, ce qui permet de maintenir un effort de freinage maximal tant que le retour de la tige 38 de commande n'a pas provoqué la réouverture du clapet à trois voies 50, et ainsi, le retour du piston 22 d'avant en arrière.

Dans cette conception, le servomoteur 10 présente l'inconvénient de nécessiter, lors de sa fabrication, le montage indépendant d'une douille 58 et d'un palpeur 52 usinés indépendamment, car l'immobilisation axiale de la douille 58 n'est assurée que de façon relativement imprécise par la clé 60 en position extrême d'actionnement de la douille 58. ,

En effet, dans le cas d'un mauvais positionnement de la clé 60 le long de la douille 58 en situation extrême de freinage, on court le risque, si la palpeur 52 est solidaire de la douille 58, ce qui serait notamment le cas si le palpeur 52 était venu de matière avec la douille 58 ou fixé à celle-ci, de voir la douille 58 être bloquée dans une position dans laquelle sa portée annulaire 74 d'extrémité avant ne serait pas en appui sur le palpeur 52. De ce fait, le palpeur 52 ne solliciterait pas le disque 32 de réaction solidaire du piston mobile 22.

De ce fait, de manière connue, le palpeur 52 et la douille sont indépendants l'un de l'autre.

Toutefois, cette conception s'avère considérablement plus coûteuse qu'une conception selon laquelle le palpeur 52 serait solidaire de la douille 58, puisque le montage de ces éléments doit au moins être effectué de façon indépendante.

Pour remédier à cet inconvénient, l'invention propose une nouvelle conception du servomoteur 10 dans laquelle le palpeur 52 est solidaire axialement de la douille 58 et dans laquelle il est prévu conjointement des moyens d'indexation axiale de la position de blocage de la douille 58.

Dans un premier mode de réalisation (non représenté), le palpeur 52 peut être réalisé indépendamment de la douille 58 et fixé à celle-ci. Dans un second mode de réalisation le palpeur est réalisé venu de matière en une seule pièce "monobloc" avec la douille 58.

Ainsi, le servomoteur 10 est considérablement moins coûteux à fabriquer que le servomoteur 10 du type décrit précédemment, puisque le montage de la douille 58 et du palpeur 52 est réalisé en une seule opération. Cette configuration permet aussi de faire l'économie du ressort de rappel 57 décrit précédemment.

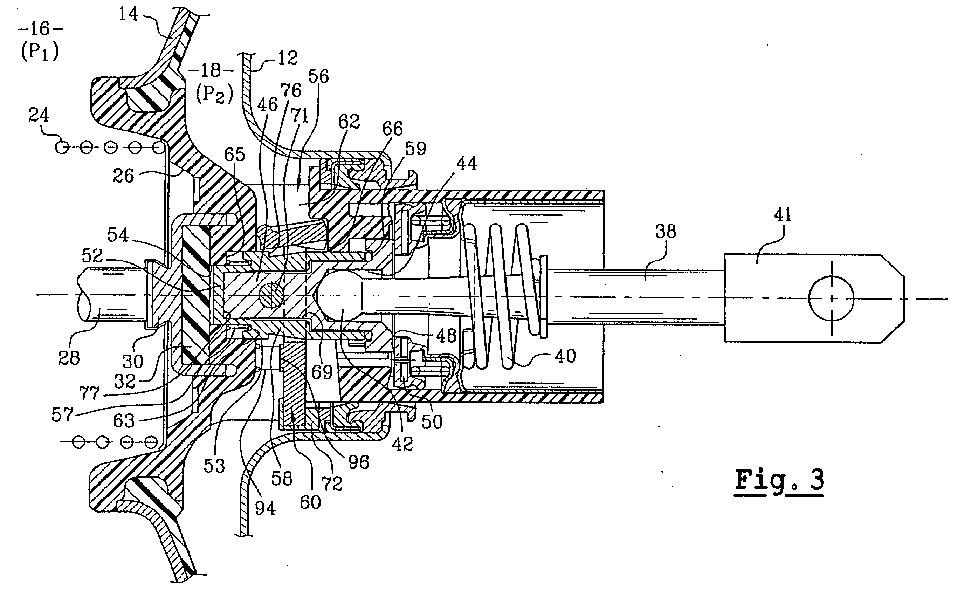

Comme l'illustre la figure 3, dans le second mode de réalisation, qui est le mode de réalisation préféré de l'invention, le palpeur 52 est réalisé en une seule pièce venue de matière avec la douille 58. Cette configuration permet d'abaisser encore le coût de fabrication du servomoteur 10, puisque la réalisation précise de la douille 58 et du palpeur 52 est obtenue en une seule opération d'usinage.

En effet, dans cette configuration, la douille 58 comporte un tronçon 52 d'extrémité libre avant formant palpeur qui est monté coulissant dans l'alésage 54 du piston mobile 22 qui débouche en regard de la coupelle de réaction 30.

Par ailleurs, la douille 58 comporte un tronçon cylindrique 53 intermédiaire, qui est agencé en arrière du tronçon 52 d'extrémité libre avant formant palpeur, qui est d'un diamètre supérieur à ce tronçon 52, et qui est monté coulissant dans un alésage arrière 55 complémentaire du piston. L'alésage arrière 55 est coaxial avec l'alésage 54.

Les alésages avant 54 et arrière 55 sont délimités par un épaulement radial 65. Des moyens élastiques, sont montés comprimés entre l'épaulement radial 65 du piston 22, et un épaulement avant 63 de la douille qui délimite le tronçon d'extrémité avant 52 et le tronçon intermédiaire 53 pour rappeler la douille 58 axialement vers l'arrière en butée au contact avec la face d'épaulement 59 du plongeur 46 le long duquel elle coulisse.

Dans le mode de réalisation préféré de l'invention, les moyens élastiques sont constitués d'un ressort hélicoïdal 57 de compression enfilé sur le tronçon 52 cylindrique d'extrémité avant de la douille 22 formant palpeur.

Cette disposition n'est toutefois pas limitative de l'invention, et le ressort hélicoïdal 57 de compression pourrait avantageusement être remplacé par un empilement de rondelles élastiques (non représentées) de taille appropriée.

D'une façon analogue au mode de réalisation précédent, le plongeur 46 est monté coulissant dans un perçage 69 de la douille dont une face avant 77 de fond permet l'appui axial du plongeur 46 dans la position extrême d'actionnement de la tige 38 de commande.

De la sorte, le tronçon avant 52 de la douille 58 est susceptible de solliciter le disque de réaction 32 du piston 22 et de maintenir cette sollicitation lorsque la douille 58 est bloquée selon une position axiale adéquate par la clé 60.

A cet effet, l'invention prévoit des moyens, notamment un embrayage unidirectionnel 56, pour indexer axialement la position de blocage de la douille 58.

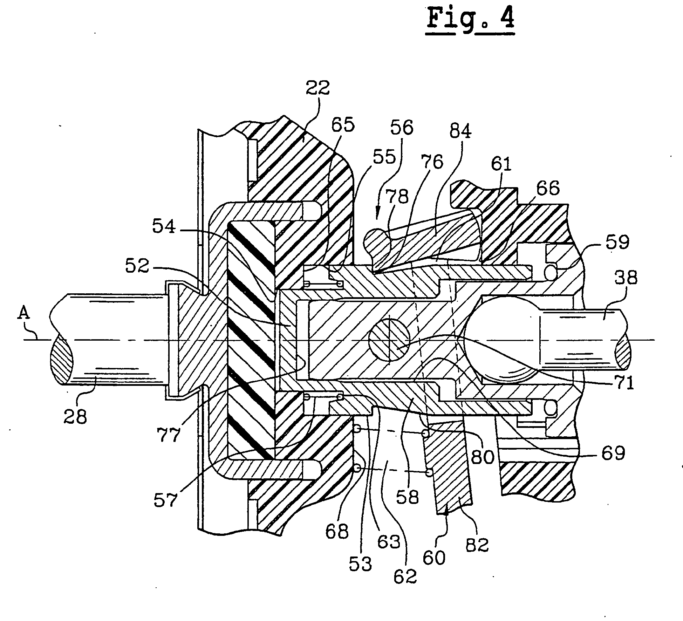

Dans ce but, conformément à l'invention et comme l'illustrent plus particulièrement la figure 4 à 5, l'embrayage unidirectionnel 56 comporte au moins un face transversale 76 de blocage de la douille 58, qui est agencée à l'arrière du tronçon intermédiaire 53, et qui est tournée axialement vers l'arrière pour former une butée pour un ergot 78 de la clé 60 s'étendant radialement vers la douille 58 , de manière à indexer axialement la position de blocage extrême de la douille 58.

A cet effet la douille 58 comporte, en arrière du tronçon intermédiaire 53, une gorge 80 radiale. La face d'épaulement qui est délimitée par la gorge 80 et le tronçon intermédiaire 53 forme la face transversale 76 de blocage.

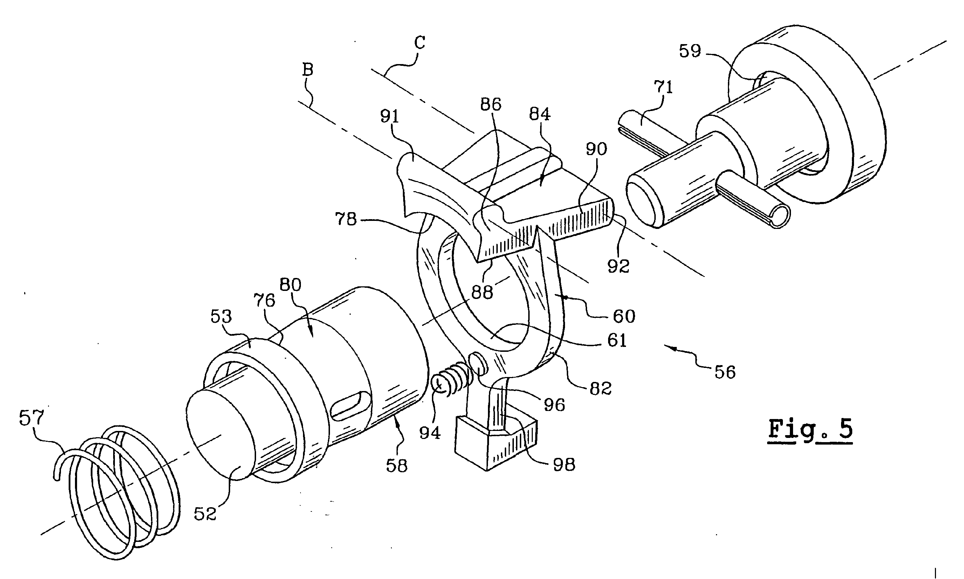

Avantageusement, comme l'illustre les figures 4 et 5, la gorge 80 est d'un profil sensiblement tronconique en arrière de la face transversale avant 76 d'épaulement. De la sorte, l'extrémité de la gorge 80 qui est opposée à la face transversale avant 76 d'épaulement rejoint progressivement la périphérie cylindrique de la partie arrière de la douille 58.

Le profil tronconique de la gorge 80 de la douille 58 est particulièrement avantageux car il permet, lors du basculement de la clé 60, de guider l'ergot 78 de la clé, qui présente la forme d'un secteur angulaire tronconique concave complémentaire du profil tronconique de la gorge 80, jusqu'à sa position de butée contre la face avant d'épaulement 76 de la douille 58.

La clé 60 comporte, d'une façon analogue à la clé précédemment décrite en référence à la figure 1, une lumière circulaire 61 qui entoure la douille 58. En revanche, à la différence de la clé 60 précédemment décrite en référence à la figure 1, le bord de cette lumière 61 ne participe pas au blocage de la douille 58.

En effet, comme l'illustre plus particulièrement la figure 4, la clé 60 présente, en section par un plan axial, la forme générale d'un "T" dont la branche verticale 82 d'orientation sensiblement radiale comporte la lumière 61 qui est traversée par la douille 58. La clé 60 en "T" comporte une branche horizontale 84, qui est d'orientation sensiblement axiale perpendiculaire à la branche principale 82, et qui est reçue sans jeu axial entre les parois avant 68 et arrière 66 de l'évidement 62 qui traverse le piston 22 perpendiculairement par rapport à son axe "A".

Cette configuration présente l'avantage de permettre seulement un mouvement de basculement de la clé 60 dans l'évidement 62. En effet, la clé 60 n'est pas susceptible de se déplacer axialement par rapport à l'évidement 62, mais peut voir sa branche 82 basculer dans l'évidement 62.

Comme l'illustre la figure 5, l'ergot 78 est porté par la branche horizontale 84 de la clé 60 en "T". Plus particulièrement, la demi-branche 86 horizontale avant de la clé en T comporte une face 88 tournée radialement vers la douille à partir de laquelle l'ergot fait saillie.

Par ailleurs, l'extrémité avant de la demi-branche 86 avant de la clé 60 en "T" est conformée en arc 91 de cylindre convexe orienté selon un axe "B" qui est orthogonal à l'axe "A" du piston 22 pour coopérer en appui avec la paroi transversale avant 68 de l'évidement. Cet arc 91 de cylindre permet notamment à la demi-branche 86 de glisser aisément la paroi transversale avant 68 de l'évidement 62.

D'une façon analogue, l'extrémité arrière de la demi-branche arrière 90 de la clé en T est conformée en arc 92 de cylindre convexe orienté selon un axe "C" orthogonal à l'axe "A" du piston 22 pour glisser le long de la paroi transversale arrière 66 de l'évidement 62. Cet arc 92 de cylindre permet notamment à la demi-branche 90 de glisser aisément sur la paroi transversale arrière 66 de l'évidement 62 lors du basculement de la clé 60. Cette configuration est notamment représentée à la figure 5.

Comme l'illustrent les figures 3 et 4 et 5, la clé 60 est montée d'une façon sensiblement analogue à la clé 60 précédemment décrite, dans l'évidement 62, à cette différence que la clé 60 en "T" selon l'invention est rappelée élastiquement à l'encontre de la paroi transversale 66 de l'évidement par un ressort de rappel 94 qui est agencé entre la paroi transversale avant 68 de l'évidement 62 et un pion 96 de centrage de la clé 60 en T qui fait saillie à partir d'une partie inférieure 98 , opposée à l'ergot 78, de la branche verticale 82 du "T".

De la sorte, en l'absence d'effort sur la tige 38 de commande, la clé 60 occupe la position qui est représentée à la figure 3. Sa branche horizontale 84 est sensiblement parallèle à l'axe A du piston 22, et sa branche verticale 82 est sensiblement perpendiculaire à cet axe A.

Lorsque le conducteur du véhicule actionne la tige de commande 38 suivant une vitesse relativement lente, ce qui correspond à un cas de freinage progressif, le piston mobile 22. se déplace sensiblement à la même vitesse que le plongeur 46, car l'établissement de la pression atmosphérique "Pₐ" s'effectue au fur et à mesure que le clapet 50 à trois voies s'ouvre. Dans cette configuration, la branche horizontale 84 étant maintenue entre les parois avant 68 et arrière 66 de l'évidement sans possibilité de déplacement axial, la clé 60 bascule dès que la branche verticale 82 de la clé quitte son appui inférieur sur le support 72 solidaire de l'enveloppe 12. L'ergot 78 vient alors au contact de la douille 58 sur la périphérie du tronçon intermédiaire 53, mais ne pénètre pas dans la gorge 80 tronconique.

De la sorte, si le conducteur relâche son effort, la clé 60 ne bloque pas la douille 58 et ne s'oppose pas au retour d'avant en arrière du piston mobile 22.

En revanche, si le conducteur actionne violemment la tige 38 de commande, ce qui correspond à un cas de freinage d'urgence, le plongeur 46 avance plus vite que ne peut le faire le piston mobile 22, du fait du retard lié à l'équilibrage de la pression dans la chambre arrière 18. De ce fait, lors du basculement de la clé 60, l'ergot 78 vient se loger dans la gorge 80 et glisse en butée jusqu'à la face 76 d'épaulement, comme représenté à la figure 4.

Puis, si le conducteur relâche partiellement son effort, la clé 60 bloque la douille 58 et donc son tronçon avant formant palpeur 52. La douille 58 s'oppose ainsi au retour du piston mobile 22 d'avant en arrière, indépendamment de la position du plongeur 46. Cette position permet de maintenir un effort de freinage maximal sur le piston 22.

Lorsque le conducteur relâche son effort de façon importante, le mouvement en retour de la tige 38 actionne le plongeur 46 dont la goupille 71 sollicite d'avant en arrière la branche verticale 82 de la clé 60, ce qui provoque le déverrouillage de la clé 60. De plus, le retour du plongeur 46 provoque l'ouverture du clapet à trois voies 50. Le rétablissement d'une dépression dans la chambre arrière 16 provoque le déplacement du piston 22 et, de ce fait provoque le retour de la clé 60 à sa position de repos, puisque sa branche horizontale 84 est guidée entre les parois avant 68 et arrière 66 du piston 22.

Il sera compris que la position axiale de face d'épaulement 76 par rapport à la douille 58 est déterminante pour le fonctionnement du servomoteur 10. C'est en effet la position axiale de la face d'épaulement 76 qui permet un blocage de la douille 58 dans une position axiale déterminée qui permet l'appui du tronçon avant 52 formant palpeur sur le disque de réaction 32, et donc le maintient d'un effort de freinage maximal.

L'invention permet donc avantageusement de bénéficier d'un effort de freinage maximal dans des situations de freinage d'urgence, quel que soit le comportement du conducteur après un freinage violent.

## Revendications

1. Servomoteur (10) pneumatique d'assistance au freinage pour un véhicule automobile, du type qui comporte une enveloppe (12) rigide à l'intérieur de laquelle est mobile une cloison (14) transversale délimitant de façon étanche une chambre avant (16), soumise à une première pression (P₁) de dépression moteur, et une chambre arrière (18) soumise à une deuxième pression (P₂) variant entre la dépression moteur et la pression atmosphérique (Pₐ), du type qui comporte un piston mobile (22) solidaire de la cloison mobile (14) et une tige (38) de commande se déplaçant dans le piston (22) sélectivement en fonction d'un effort axial d'entrée exercé vers l'avant à l'encontre d'un effort de rappel exercé sur la tige (38) par un ressort (40) de rappel, du type dans lequel la tige (38) est mobile suivant une position d'actionnement intermédiaire ou une position d'actionnement extrême obtenue lorsque l'effort d'entrée est appliqué à une vitesse élevée déterminée, du type qui comporte un plongeur (46) qui est agencé à l'avant de la tige de commande (38) dans le piston (22) et un clapet (50) à trois voies qui comporte au moins un siège annulaire (48) arrière du plongeur (46) et qui est susceptible de faire varier la deuxième pression (P₂) régnant dans la chambre arrière (18), notamment en mettant en communication la chambre avant (16) et la chambre arrière (18) lorsque la tige (38) de commande est en position de repos ou en mettant progressivement la chambre arrière (18) en communication avec la pression atmosphérique (Pₐ) lorsque la tige (38) de commande est actionnée, du type dans lequel, dans la position extrême d'actionnement de la tige (38) de commande, un palpeur (52) monté coulissant à l'extrémité avant du plongeur (46) est sollicité par le plongeur (46) au contact d'un disque (32) de réaction solidaire de la face arrière du piston mobile (22) pour transmettre au plongeur (46) et à la tige (38) de commande l'effort de réaction du piston mobile (22), et du type qui comporte un dispositif (56) d'embrayage unidirectionnel qui comporte une douille (58) coaxiale qui coulisse sur le plongeur (46), et une clé (60) sensiblement annulaire qui entoure avec jeu la douille (58) et qui est susceptible, lorsque l'effort d'entrée est appliqué à la vitesse déterminée, d'être entraînée par le piston (22) de commande pour basculer autour d'un axe globalement transversal pour coopérer avec la périphérie de la douille (58) et pour la bloquer dans une position axiale avant extrême dans laquelle elle bloque le palpeur (52) indépendamment du plongeur (46) et de la tige (38) de commande,
**caractérisé en ce que** le palpeur (52) est solidaire axialement de la douille (58) et **en ce qu'**il est prévu des moyens pour indexer axialement la position de blocage de la douille (58).

2. Servomoteur (10) pneumatique selon la revendication précédente, **caractérisé en ce que** le palpeur (52) est réalisé en une seule pièce venue de matière avec la douille (58).

3. Servomoteur (10) pneumatique selon la revendication précédente, **caractérisé en ce que** la douille (58) comporte un tronçon (52) d'extrémité libre avant formant palpeur qui est monté coulissant dans un alésage avant (54) complémentaire du piston (22).

4. Servomoteur (10) pneumatique selon la revendication précédente, **caractérisé en ce que** la douille (58) comporte un tronçon cylindrique intermédiaire (53) qui est d'un diamètre supérieur au tronçon (52) d'extrémité libre avant de la douille (58) et qui est monté coulissant dans un alésage arrière (55) complémentaire du piston (22).

5. Servomoteur (10) pneumatique selon la revendication précédente, **caractérisé en ce que** des moyens élastiques sont montés entre un épaulement radial (65) du piston, qui délimite les alésages avant (54) et arrière (55), et un épaulement avant (63) de la douille qui délimite le tronçon d'extrémité avant (52) et le tronçon intermédiaire (53) pour rappeler la douille (58) axialement vers l'arrière en butée contre le plongeur (46).

6. Servomoteur (10) pneumatique selon la revendication précédente, **caractérisé en ce que** les moyens de rappel élastique comportent un ressort (57) hélicoïdal de compression enfilé sur le tronçon (52) cylindrique d'extrémité avant de la douille (58).

7. Servomoteur (10) pneumatique selon l'une quelconque des revendications précédentes, **caractérisé en ce que** le plongeur (46) est monté coulissant dans un perçage (69) de la douille (58) dont une face avant (77) de fond permet l'appui axial du plongeur (46) dans la position extrême d'actionnement de la tige (38) de commande.

8. Servomoteur (10) pneumatique selon l'une quelconque des revendications 4 à 7, **caractérisé en ce que** la douille (58) comporte au moins un face (76) transversale de blocage, qui est tournée axialement vers l'arrière pour former une butée pour un ergot (78) de la clé (60)s'étendant radialement vers la douille (58), de manière à indexer axialement la position de blocage extrême de la douille (58).

9. Servomoteur (10) pneumatique selon la revendication précédente, **caractérisé en ce que** la douille (58) est cylindrique, d'un diamètre sensiblement constant, et comporte une gorge (80) radiale d'un profil sensiblement tronconique dont une face transversale avant (76) d'épaulement forme la face transversale de blocage.

10. Servomoteur (10) pneumatique selon la revendication précédente, **caractérisé en ce que** la clé (60) présente, en section par un plan axial, la forme d'un "T" dont la branche verticale (82) d'orientation sensiblement radiale est traversée par la douille (60) et dont la branche horizontale (84) comporte en saillie de son extrémité avant l'ergot (78) conformé selon un secteur angulaire tronconique concave complémentaire du profil tronconique de la gorge (80) de la douille (58), et est conformée à ses deux extrémités en arc de cylindre (91, 92) pour être reçue sans jeu axial entre deux parois (66, 68) d'un évidement (62) qui traverse le piston (22) perpendiculairement par rapport à son axe (A) de façon à ne permettre qu'un basculement de la clé (60) dans l'évidement (62), la clé (60) étant par ailleurs rappelée élastiquement à l'encontre de la paroi arrière (66) de l'évidement (62).

## Claims

1. Pneumatic servomotor (10) for an assisted braking of a motor vehicle, of the type comprising a rigid casing (12), in which a transverse partition wall (14) is movable, thus defining in an airtight manner a front chamber (16) under a first engine negative pressure (P₁), and a rear chamber (18) under a second pressure (P₂), varying between the engine negative pressure and the atmospheric pressure (Pₐ) ; of the type including a moving piston (22), integral with the moving partition wall (14), and a control rod (38), moving inside the piston (22), in a selective manner as a function of an axial input force, exerted in the forward direction against a return force applied to the rod (38) by a return spring (40) ; of the type according to which the control rod (38) is biased towards either an intermediate actuation position or an end actuation position, resulting from the applying of the input force at a determined high speed ; of the type comprising a plunger (46), arranged at the front part of the control rod (38) inside the piston (22), and a three-way valve (50), including at least an annular seat (48) borne by a rear section of the plunger (46), and capable of varying the second pressure (P₂), prevailing within the rear chamber (18), particularly by connecting the front chamber (16) with the rear chamber (18) when the control rod (38) is in the rest position, or by gradually connecting the rear chamber (18) with the atmospheric pressure (Pₐ) when the control rod (38) is actuated ; of the type in which, in the end actuation position of the control rod (38), a finger (52), which is slidingly fitted on the front end of the plunger (46), is biased by the plunger (46) into contact with a reaction disk (32), integral with the rear face of the moving piston (22), so as to transmit the reaction force of the moving piston (22) to the plunger (46) and to the control rod (38) ; and of the type comprising a unidirectional clutch device (56), which includes a coaxial sleeve (58), sliding on the plunger (46), and a substantially ring-shaped key (60), arranged with a given clearance around the sleeve (58) and capable of being driven by the moving piston (22) when the input force is applied at the determined speed, so as to rotate on a generally transverse axis in order to cooperate with the periphery of the sleeve (58) and lock it in an end front axial position, in which it locks the finger (52), independently of the plunger (46) and of the control rod (38),
**characterised in that** the finger (52) is axially integral with the sleeve (58) and **in that** means are provided for an axial indexing of the locking position of the sleeve (58).

2. Pneumatic servomotor (10) according to the preceding claim, **characterised in that** the finger (52) and the sleeve (58) are manufactured as a single piece from the same material.

3. Pneumatic servomotor (10) according to the preceding claim, **characterised in that** the sleeve (58) comprises a finger-forming front free end section (52), which is slidably fitted within a complementary front bore (54) of the piston (22).

4. Pneumatic servomotor (10) according to the preceding claim, **characterised in that** the sleeve (58) has an intermediate cylindrical section (53) having a greater diameter than the front free end section (52) of the sleeve (58) and which is slidably fitted within a complementary rear bore (55) of the piston (22).

5. Pneumatic servomotor (10) according to the preceding claim, **characterised in that** resilient means are mounted between a radial shoulder (65) on the piston, defining the front bore (54) and the rear bore (55), and a front shoulder (63) on the sleeve, which defines the front end section (52) and the intermediate section (53), so as to return the sleeve (58) axially rearwards into abutment against the plunger (46).

6. Pneumatic servomotor (10) according to the preceding claim, **characterised in that** the resilient return means comprise a compression helical spring (57), arranged on the front end cylindrical section (52) of the sleeve (58).

7. Pneumatic servomotor (10) according to any one of the preceding claims, **characterised in that** the plunger (46) is slidably fitted inside a hole (69) made in the sleeve (58), a bottom front face (77) of which provides the axial support for the plunger (46) in the end actuation position of the control rod (38).

8. Pneumatic servomotor (10) according to any one of claims 4 to 7, **characterised in that** the sleeve (58) includes at least one locking transverse face (76), axially facing rearwards so as to constitute a stop for a peg (78), provided on the key (60) and extending radially towards the sleeve (58), for an axial indexing of the end locking position of the sleeve (58).

9. Pneumatic servomotor (10) according to the preceding claim, **characterised in that** the sleeve (58) has a cylindrical shape with a substantially constant diameter and **in that** it comprises a radial groove (80) exhibiting a substantially truncated-cone-shaped profile, a shoulder-forming front transverse face (76) of which constitutes the locking transverse face.

10. Pneumatic servomotor (10) according to the preceding claim, **characterised in that** the key (60) has, in an axial sectional view, the shape of a tee, the vertical branch (82) of which is substantially radially directed and traversed by the sleeve (58), whereas its horizontal branch (84) bears the peg (78), which protrudes from the front part and has the shape of a concave truncated-cone-shaped angular sector, which is complementary to the truncated-cone-shaped profile of the groove (80) in the sleeve (58), said branch being shaped, at both ends, into an arc (91, 92) of a cylinder so as to be received, without any axial clearance, between two walls (66, 68) of a cavity (62) traversing the piston (22), perpendicularly to its axis (A), so as to allow but a rocking motion of the key (60) inside the cavity (62), the key (60) being further resiliently biased against the rear wall (66) of the cavity (62).

## Patentansprüche

1. Pneumatischer Servomotor (10) zur Bremsunterstützung für ein Kraftfahrzeug, vom Typ, der ein starres Gehäuse (12) aufweist, in dem eine quer verlaufende Wand (14) beweglich ist, welche in dichter Weise eine vordere Kammer (16), die einem ersten Druck (P₁), dem Unterdruck des Motors ausgesetzt ist, und eine hintere Kammer (18) begrenzt, die einem zweiten Druck (P₂) ausgesetzt ist, der zwischen dem Unterdruck des Motors und dem atmosphärischen Druck (Pₐ) variiert, vom Typ, der einen beweglichen, mit der beweglichen Wand (14) fest verbundenen Kolben (22) und eine Steuerstange (38) aufweist, die sich im Kolben (22) in Abhängigkeit von einer axialen Eingangskraft verschiebt, die nach vorne, entgegen einer Rückstellkraft ausgeübt wird, welche durch eine Rückstellfeder (40) auf die Stange (38) ausgeübt wird, vom Typ, bei dem die Stange (38) entlang einer Betätigungszwischenstellung oder einer Betätigungsendstellung beweglich ist, welche erreicht wird, wenn die Eingangskraft bei einer bestimmten, erhöhten Geschwindigkeit aufgebracht wird, vom Typ, der einen Tauchkolben (46), der vorne an der Steuerstange (38) im Kolben (22) angeordnet ist, und ein Dreiwegeventilelement (50) aufweist, das mindestens einen hinteren ringförmigen Sitz (48) des Tauchkolbens (46) aufweist und den in der hinteren Kammer (18) herrschenden zweiten Druck (P₂) variieren kann, insbesondere indem die vordere Kammer (16) und die hintere Kammer (18) verbunden werden, wenn sich die Steuerstange (38) in der Ruhestellung befindet, oder indem die hintere Kammer (18) allmählich mit dem atmosphärischen Druck (Pₐ) verbunden wird, wenn die Steuerstange (38) betätigt wird, vom Typ, bei dem in der Betätigungsendstellung der Steuerstange (38) ein am vorderen Ende des Tauchkolbens (46) gleitend angebrachter Taster (52) bei der Berührung mit einer mit der hinteren Fläche des beweglichen Kolbens (22) fest verbundenen Reaktionsscheibe (32) vom Tauchkolben (46) beaufschlagt wird, um dem Tauchkolben (46) und der Steuerstange (38) die Reaktionskraft des beweglichen Kolbens (22) zu übertragen, und vom Typ, der eine in eine Richtung wirkende Kupplungsvorrichtung (56) aufweist, die eine koaxiale Hülse (58), die auf dem Tauchkolben (46) gleitet, und einen im Wesentlichen ringförmigen Schlüssel (60) aufweist, der die Hülse (58) mit Spiel umgibt und der, wenn die Eingangskraft bei der vorbestimmten Geschwindigkeit aufgebracht wird, vom Steuerkolben (22) so mitgenommen werden kann, dass er um eine insgesamt quer verlaufende Achse kippt, um mit dem Umfang der Hülse (58) zusammenzuwirken und sie in einer axialen, vorderen Endstellung zu blockieren, in der sie den Taster (52) unabhängig von dem Tauchkolben (46) und der Steuerstange (38) blockiert,
**dadurch gekennzeichnet, dass** der Taster (52) mit der Hülse (58) axial fest verbunden ist und dass Mittel vorgesehen sind, um die Blockierungsstellung der Hülse (58) axial einzustellen.

2. Pneumatischer Servomotor (10) nach dem vorhergehenden Anspruch, **dadurch gekennzeichnet, dass** der Taster (52) mit der Hülse (58) einstückig ausgebildet ist.

3. Pneumatischer Servomotor (10) nach dem vorhergehenden Anspruch, **dadurch gekennzeichnet, dass** die Hülse (58) einen freien, vorderen Endabschnitt (52) aufweist, der einen Taster bildet, der in einer komplementären vorderen Bohrung (54) des Kolbens (22) gleitend angebracht ist.

4. Pneumatischer Servomotor (10) nach dem vorhergehenden Anspruch, **dadurch gekennzeichnet, dass** die Hülse (58) einen zylindrischen Zwischenabschnitt (53) aufweist, dessen Durchmesser größer ist als der des freien, vorderen Endabschnitts (52) der Hülse (58) und der in einer komplementären hinteren Bohrung (55) des Kolbens (22) gleitend angebracht ist.

5. Pneumatischer Servomotor (10) nach dem vorhergehenden Anspruch, **dadurch gekennzeichnet, dass** zwischen einem radialen Absatz (65) des Kolbens, der die vordere Bohrung (54) und die hintere Bohrung (55) begrenzt, und einem vorderen Absatz (63) der Hülse, der den vorderen Endabschnitt (52) und den Zwischenabschnitt (53) begrenzt, elastische Mittel angebracht sind, um die Hülse (58) axial nach hinten in Anschlag gegen den Taster (46) zurückzustellen.

6. Pneumatischer Servomotor (10) nach dem vorhergehenden Anspruch, **dadurch gekennzeichnet, dass** die elastischen Rückstellmittel eine spiralförmige Druckfeder (57) aufweisen, die auf den zylindrischen, vorderen Endabschnitt (52) der Hülse (58) aufgeschoben ist.

7. Pneumatischer Servomotor (10) nach einem der vorhergehenden Ansprüche, **dadurch gekennzeichnet, dass** der Tauchkolben (46) in einer Durchbohrung (69) der Hülse (58) gleitend angebracht ist, bei der eine vordere rückseitige Fläche (77) die axiale Anlage des Tauchkolbens (46) in der Betätigungsendstellung der Steuerstange (38) ermöglicht.

8. Pneumatischer Servomotor (10) nach einem der Ansprüche 4 bis 7, **dadurch gekennzeichnet, dass** die Hülse (58) mindestens eine quer verlaufende Blockierungsfläche (76) aufweist, die axial nach hinten gerichtet ist, um einen Anschlag für eine sich radial zur Hülse (58) erstreckende Nase (78) des Schlüssels (60) zu bilden, so dass die Blockierungsendstellung der Hülse (58) axial eingestellt ist.

9. Pneumatischer Servomotor (10) nach dem vorhergehenden Anspruch, **dadurch gekennzeichnet, dass** die Hülse (58) zylindrisch ist, einen im Wesentlichen konstanten Durchmesser besitzt und eine radiale Nut (80) aufweist, deren Profil im Wesentlichen kegelstumpfartig verläuft und bei der eine quer verlaufende vordere Absatzfläche (76) die quer verlaufende Blockierungsfläche bildet.

10. Pneumatischer Servomotor (10) nach dem vorhergehenden Anspruch, **dadurch gekennzeichnet, dass** der Schlüssel (60) im Schnitt gemäß einer axialen Ebene die Form eines "T" besitzt, bei dem der im Wesentlichen radial ausgerichtete, senkrechte Arm (82) von der Hülse (60) durchquert ist und bei dem der waagerechte Arm (84) die Nase (78) aufweist, die von seinem vorderen Ende hervorsteht und gemäß einem kegelstumpfartigen, konkaven und zum kegelstumpfartigen Profil der Nut (80) der Hülse (58) komplementären Winkelbereich ausgebildet ist, und an seinen beiden Enden (91, 92) zylinderbogenförmig ausgebildet ist, um ohne axiales Spiel zwischen zwei Wänden (66, 68) einer Vertiefung (62) aufgenommen zu sein, die den Kolben (22) bezüglich seiner Achse (A) senkrecht durchquert, so dass lediglich ein Kippen des Schlüssels (60) in der Vertiefung (62) gestattet ist, wobei der Schlüssel (60) ferner gegen die Rückwand (66) der Vertiefung (62) elastisch zurückgestellt wird.
